# EUROPEAN PATENT SPECIFICATION

(11) **EP 4 255 113 B1**
(45) Date of publication and mention of the grant of the patent: **30.04.2025**
(21) Application number: 22781429.0
(22) Date of filing: 19.03.2022
(51) Int. Cl.: F24C 15/10, F24C 15/08, H05B 6/12, C03C 27/10

(54) **COOKING APPLIANCE**
KOCHGERÄT
APPAREIL DE CUISSON

(30) Priority: 29.03.2021 KR 20210040728; 11.05.2021 KR 20210060889
(43) Date of publication of application: 04.10.2023
(73) Proprietor: Samsung Electronics Co., Ltd., Suwon-si, Gyeonggi-do 16677 (KR)
(72) Inventor: YOON, Heejin, Suwon-si, Gyeonggi-do 16677 (KR); MOK, Junesang, Suwon-si, Gyeonggi-do 16677 (KR); LEE, Daeun, Suwon-si, Gyeonggi-do 16677 (KR)
(74) Representative: Walaski, Jan Filip
(86) International application number: PCT/KR2022/003485
(87) International publication number: WO 2022/211308

(56) References cited:
- WO-A1-2021/049796
- KR-A- 20100 124 957
- KR-A- 20130 090 568
- KR-A- 20210 030 728
- US-A- 5 530 224
- US-A1- 2016 150 596
- ANONYMOUS: "Bespoke Color `All Induction` "Starts from 1.59 Million Won"", SAMSUNG ELECTRONICS CO., LTD., 22 June 2020 (2020-06-22), XP055974465, Retrieved from the Internet <URL:https://www.wowtv.co.kr/NewsCenter/News/Read?articleId=A202006220081&t=NN> [retrieved on 20221025]
- ANONYMOUS: "BESPOKE Induction Built-in NZ63T8708XW ", SAMSUNG, 10 December 2020 (2020-12-10), XP055974466, Retrieved from the Internet <URL:https://www.samsung.com/sec/business/built-in-appliances/nz63t8708xw/NZ63T8708XW/> [retrieved on 20221025]

## Description

### [Technical Field]

The present disclosure relates to a cooking apparatus, and more particularly, to a cooking apparatus including a plurality of glasses.

### [Background Art]

In general, an induction heating cooking apparatus is a cooking apparatus that cooks food by heating a cooking container using the principle of induction heating. The induction heating cooking apparatus may include a glass on which a cooking container is placed, and an induction heating coil disposed below the glass to generate a magnetic field when a current is applied.

When a current is applied to the induction heating coil to generate a magnetic field, a secondary current is induced to the cooking container, and Joule heat is generated by an electrical resistance of the cooking container itself. By the Joule heat, the cooking container is heated and food contained in the cooking container is heated.

On the glass of the induction heating cooking apparatus, not only a cooking area on which a cooking container is placed is provided, but also a control area for displaying a variety of information and receiving a control command from a user is also provided.

However, when the cooking area in which a cooking container is placed on one glass and the control area for displaying a variety of information and receiving a control command from a user are provided, the respective areas are not physically divided, so that the user may accidentally touch the cooking area of a high temperature. In addition, because various colors may not be implemented on the glass, aesthetics may be deteriorated.

Therefore, there is a demand to divide the cooking area and the control area by using a plurality of glasses and to implement a cooking apparatus with improved aesthetics. WO 2021/049796 A1 discloses a cooking apparatus including a plurality of glasses.

### [Disclosure]

### [Technical Problem]

The present disclosure is directed to providing a cooking apparatus including a plurality of glasses physically separated.

The present disclosure is directed to providing a cooking apparatus including a plurality of glasses having different colors.

The present disclosure is directed to providing a cooking apparatus in which a cooking area and a control area are provided on different glasses.

The present disclosure is directed to providing a cooking apparatus capable of preventing foreign substances from being introduced into gaps between a coupling member for coupling a plurality of glasses and the plurality of glasses.

### [Technical Solution]

The present disclosure provides a cooking apparatus including a main body provided to accommodate an induction heating coil, and a glass assembly provided above the main body to allow a cooking container to be placed thereon, wherein the glass assembly includes a first glass forming a first area on which the cooking container is to be placed, a second glass forming a second area separated from the first area, and a coupling member coupled to each of the first glass and the second glass, the coupling member including a base disposed below the first glass and the second glass to support the first glass and the second glass, and a column extending upward from the base and be curved to correspond to a side surface of the first glass and a side surface of the second glass.

The glass assembly may further include an adhesive member provided to couple the first glass and the second glass to the coupling member, and the base may include a first portion spaced apart from a lower surface of the first glass and spaced apart a lower surface of the second glass to accommodate the adhesive member, and a second portion protruding upward from one end of the first portion to support the first glass and the second glass.

The coupling member may further include a groove depressed downward from an upper surface of the first portion to accommodate the adhesive member and formed adjacent to the column.

An upper surface of the column may be formed to be lower than an upper surface of the first glass and lower than an upper surface of the second glass, and the glass assembly may further include a sealing member provided above the upper surface of the column to seal a coupling space between the first glass and the second glass and the coupling member.

A height of an upper surface of the sealing member may be provided to be lower than or equal to a height of the upper surface of the first glass and a height of the upper surface of the second glass.

A ratio of a thickness of the first glass and the second glass to a thickness of the sealing member may be 3:1.

The first glass and the second glass may be formed of different materials, and the glass assembly may further include an outer frame provided to cover circumferences of the first glass and the second glass to fix the first glass and the second glass.

The glass assembly may further include an adhesive member disposed between the first glass and the second glass, and the outer frame, and the outer frame may include a first portion spaced apart from a lower surface of the first glass or spaced apart a lower surface of the second glass to accommodate the adhesive member, a second portion protruding upward from one end of the first portion to support the first glass or the second glass, and a third portion protruding upward from the other end of the first portion to cover a circumference of the glass assembly.

The outer frame may include a first frame extending in a first direction to cover one side of the glass assembly, and a second frame coupled to the first frame and extending in a second direction perpendicular to the first direction to cover the other side of the glass assembly, the first frame may include a coupling protrusion protruding from one end thereof along the first direction to be coupled to the second frame, and the second frame may include a coupling groove recessed from one end thereof along the second direction to accommodate the coupling protrusion.

The coupling protrusion may include a neck extending in the second direction, and a head provided at one end of the neck along the second direction and having a length longer along the first direction than a length of the neck along the first direction.

The glass assembly may further include a bracket provided on edge portions of the first glass and the second glass to be coupled to the main body.

The cooking apparatus may further include a circuit board provided below the second glass in the main body to receive an input from the second glass, wherein an input part electrically connected to the circuit board may be provided in the second area to control a current flowing through the induction heating coil.

The bracket may be a first bracket, and the main body may further include a second bracket in contact with the first bracket to support the first glass and the second glass, and a ground portion provided on the first bracket.

Another aspect of the present disclosure provides a cooking apparatus including a main body including an induction heating coil, and a glass assembly disposed above the main body, wherein the glass assembly includes a first glass forming a first area on which the cooking container is to be placed, a second glass forming a second area separated from the first area and formed of a material different from that of the first glass, a middle frame provided to couple the first glass and the second glass, and an outer frame provided to cover circumferences of the first glass and the second glass to fix the first glass and the second glass when the first glass and the second glass are coupled.

The outer frame may include a first frame extending in a first direction to cover one sides of the first glass and the second glass when the first glass and the second glass are coupled, and a second frame coupled to the first frame and extending in a second direction perpendicular to the first direction to cover the other side of the first glass or the second glass, the first frame may include a coupling protrusion protruding from one end thereof along the first direction to be coupled to the second frame, and the second frame may include a coupling groove recessed from one end thereof along the second direction to accommodate the coupling protrusion.

The coupling protrusion may include a neck extending in the second direction, and a head provided at one end of the neck along the second direction and having a length longer along the first direction than a length of the neck along the first direction.

The glass assembly may further include an adhesive member disposed between the first glass and the second glass and the outer frame, and the outer frame may include a first portion spaced apart from a lower surface of the first glass and spaced apart a lower surface of the second glass to accommodate the adhesive member, a second portion protruding upward from one end of the first portion to support the first glass and the second glass, and a third portion protruding upward from the other end of the first portion to cover a circumference of the glass assembly.

Another aspect of the present disclosure provides a cooking apparatus including a first glass forming a first area on which the cooking container is to be placed, a second glass forming a second area separated from the first area, and a coupling member coupled to each of the first glass and the second glass, the coupling member including a base disposed below the first glass and the second glass and a column extending upward from the base, and a sealing member provided above an upper surface of the column to seal a coupling space between the first glass and the second glass and the coupling member, the upper surface of the column is provided to be lower than an upper surface of the first glass and an upper surface of the second glass.

The column may be curved to correspond to a side surface of the first glass and a side surface of the second glass.

The coupling member may further include a groove recessed from the base.

### [Advantageous Effects]

According to the present disclosure, a cooking apparatus including a plurality of glasses physically separated can be provided.

According to the present disclosure, a cooking apparatus including a plurality of glasses having different colors can be provided.

According to the present disclosure, a cooking apparatus in which a cooking part and an input part are provided on different glasses can be provided.

According to the present disclosure, a cooking apparatus capable of preventing foreign substances from being introduced into gaps between a coupling member for coupling a plurality of glasses and the plurality of glasses can be provided.

### [Description of Drawings]

FIG. 1 is a perspective view of a cooking apparatus according to an embodiment of the present disclosure.
FIG. 2 is an exploded perspective view of the cooking apparatus illustrated in FIG. 1.
FIG. 3 is an exploded perspective view of an outer frame and a plurality of glasses in the cooking apparatus illustrated in FIG. 1.
FIG. 4 is a cross-sectional view of the outer frame and the plurality of glasses in the cooking apparatus illustrated in FIG. 1.
FIGS. 5 to 7 are cross-sectional views illustrating a process in which the plurality of glasses and a middle frame are coupled in the cooking apparatus illustrated in FIG. 2.
FIG. 8 is a cross-sectional view of a cooking apparatus according to another embodiment of the present disclosure.
FIG. 9 is a cross-sectional view of a cooking apparatus according to another embodiment of the present disclosure.
FIG. 10 is a cross-sectional view of the cooking apparatus according to an embodiment of the present disclosure.
FIG. 11 is an enlarged perspective view of the outer frame in the cooking apparatus illustrated in FIG. 3.
FIG. 12 is a flowchart illustrating a manufacturing method of the cooking apparatus according to an embodiment of the present disclosure.

### [Mode of the Disclosure]

The embodiments described in the present specification and the configurations shown in the drawings are only examples of preferred embodiments of the present disclosure, and various modifications may be made at the time of filing of the present disclosure to replace the embodiments and drawings of the present specification.

Like reference numbers or signs in the various drawings of the application represent parts or components that perform substantially the same functions.

The terms used herein are for the purpose of describing the embodiments and are not intended to restrict and/or to limit the present disclosure. For example, the singular expressions herein may include plural expressions, unless the context clearly dictates otherwise. Also, the terms "comprises" and "has" are intended to indicate that there are features, numbers, steps, operations, elements, parts, or combinations thereof described in the specification, and do not exclude the presence or addition of one or more other features, numbers, steps, operations, elements, parts, or combinations thereof.

It will be understood that, although the terms first, second, etc. may be used herein to describe various components, these components should not be limited by these terms, and these terms are only used to distinguish one component from another. For example, without departing from the scope of the present disclosure, the first component may be referred to as a second component, and similarly, the second component may also be referred to as a first component. The term "and/or" includes any combination of a plurality of related items or any one of a plurality of related items.

In this specification, the terms "front end," "rear end," "upper portion," "lower portion," "upper end" and "lower end" used in the following description are defined with reference to the drawings, and the shape and position of each component are not limited by these terms. For example, a -Y direction in which a second area is formed is defined as the front, a Y direction in which a first area is formed is defined as the rear, and left, right, upper and lower directions are defined based on these.

Hereinafter, embodiments of the present disclosure will be described in detail with reference to the accompanying drawings.

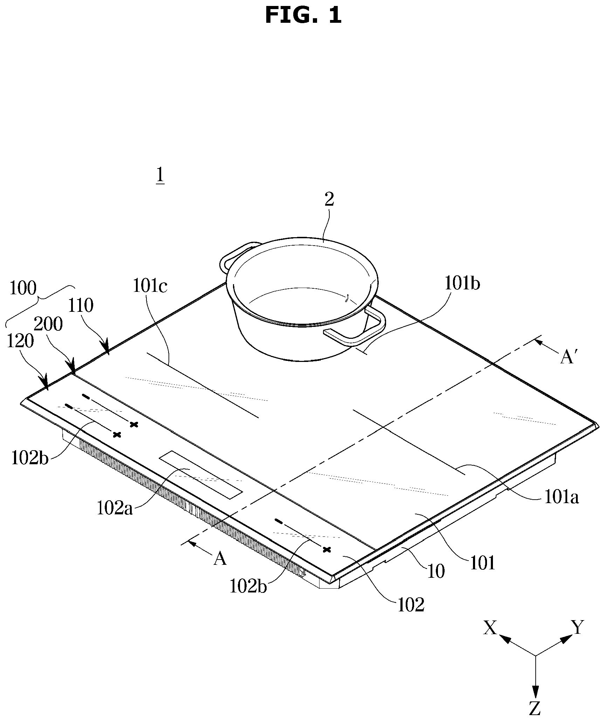

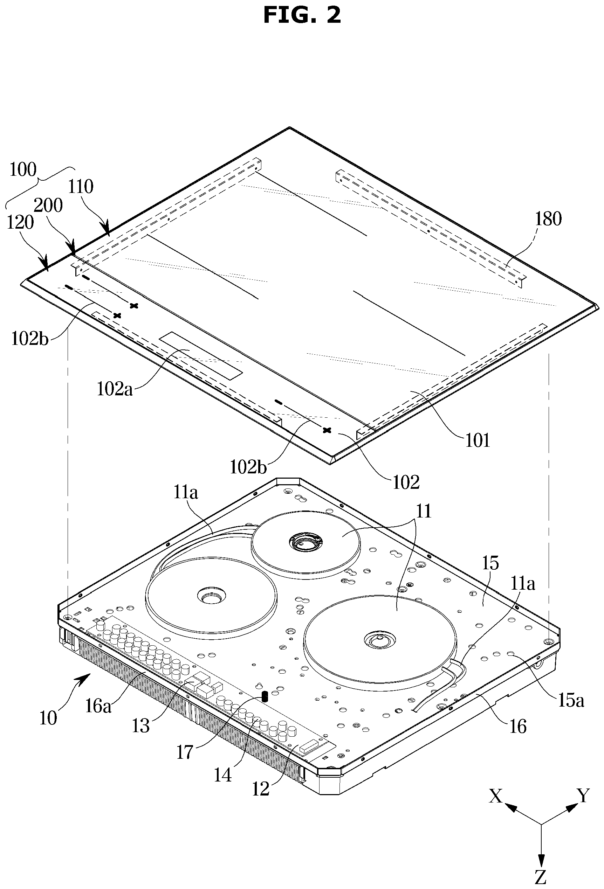

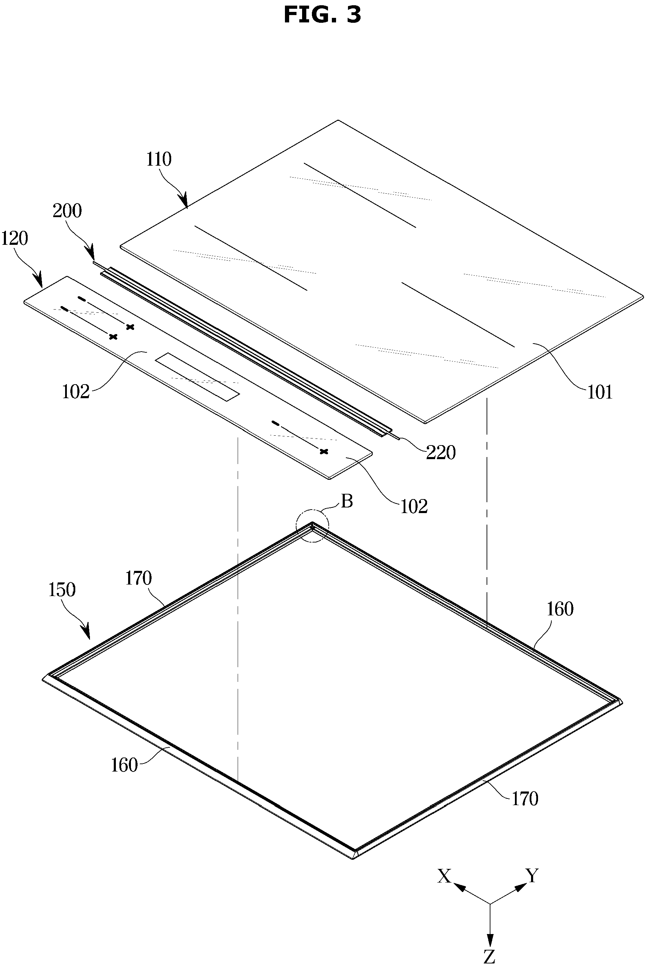

FIG. 1 is a perspective view of a cooking apparatus according to an embodiment of the present disclosure. FIG. 2 is an exploded perspective view of the cooking apparatus illustrated in FIG. 1. FIG. 3 is an exploded perspective view of an outer frame and a plurality of glasses in the cooking apparatus illustrated in FIG. 1.

Referring to FIGS. 1 to 3, a cooking apparatus 1 may include a main body 10, an induction heating coil 11, a circuit board 12, a coil seating plate 15, an elastic member 17, and a glass assembly 100 positioned on the main body 10.

The main body 10 may form an appearance of the cooking apparatus 1. The induction heating coil 11 may be accommodated in the main body 10 and generate a magnetic field to inductively heat a cooking container 2. The induction heating coil 11 may be electrically connected to a main board (not shown) provided in the main body 10 through an electric wire 11a.

The circuit board 12 may be disposed below a second glass 120. The circuit board 12 may include a display device 13 and a touch device 14. The display device 13 may be disposed below a display part 102a formed in a second area 102. Whether the cooking container 2 is heated by the induction heating coil **11** may be displayed on the display device 13. Therefore, a user may check through the display part 102a whether the cooking container 2 is heated. The touch device 14 may be disposed below an input part 102b provided in the second area 102. The touch device 14 may receive a touch signal from the input part 102b. For example, the touch device 14 may receive an input using a capacitive touch method. However, the present disclosure is not limited thereto, and the touch device 14 may receive an input using a pressure-sensitive touch method. The user may control a current flowing through the induction heating coil through the input part 102b, and may determine a degree to which the cooking container 2 is heated.

The induction heating coil 11 may be seated on the coil seating plate 15. A coil seating hole 15a for seating the induction heating coil 11 may be provided on the coil seating plate 15. A plurality of the coil seating holes 15a may be provided.

The elastic member 17 may be disposed below a middle frame 200 and above the coil seating plate 15. For example, the elastic member 17 may be provided between the middle frame 200 and the coil seating plate 15 to maintain a separation distance between the middle frame 200 and the coil seating plate 15. The elastic member 17 may ground the middle frame 200 and the coil seating plate 15.

The glass assembly 100 may include a first glass 110 forming a first area 101, the second glass 120 forming the second area 102, the middle frame 200, and an outer frame 150. However, not all of the above components of the glass assembly 100 are essential, and some components may be omitted.

The first glass 110 may include heating area guides 101a, 101b, and 101c and support the cooking container 2. The cooking container 2 may be disposed in the first area 101. The second glass 120 includes the second area 102, and the display part 102a and the input part 102b may be provided in the second area 102. The display part 102a may be formed in the second area 102 to display a variety of information about the cooking apparatus 1, and the input part 102b may be formed in the second area 102 to receive a control command from the user. The middle frame 200 may be provided to couple the first glass 110 and the second glass 120.

The glass assembly 100 may include the first glass 110, the second glass 120, the middle frame 200, and the outer frame 150. The first glass 110 and the second glass 120 may be physically separated and may be coupled through the middle frame 200. The middle frame 200 may be the coupling member 200.

The first glass 110 forms the first area 101, the cooking container 2 may be disposed in the first area 101, and the cooking container 2 disposed on the first glass 110 may be inductively heated by the magnetic field generated by the induction heating coil 11.

The second glass 120 forms the second area 102 separated from the first area 101, and in the second area 102, cooking information of the cooking apparatus 1 including a temperature of the cooking container 2, a cooking elapse time and/or date/time may be displayed through the display part 102a.

**In** addition, in the second area 102, the input part 102b to receive a control command from the user to turn on/off the cooking apparatus 1 or control the temperature of the cooking container 2 may be provided. The input part 102b may receive an input by a touch of the user.

The second glass 120 may be tempered glass. The second glass 120 may also be heat-resistant glass. The first glass 110 and the second glass 120 may be formed of different materials. For example, the first glass 110 may have a property that light is not transmitted, and the second glass 120 may have a property capable of transmitting a touch signal so as to transmit a signal to the circuit board 12 provided thereunder through a touch.

At least a portion of the first glass 110 may be coupled to one side of the middle frame 200. For example, the first glass 110 may be coupled to the middle frame 200 on at least one of a side surface 113 and a lower surface 112. The first glass 110 and the middle frame 200 may be coupled by adhesion. At least a portion of the second glass 120 may be coupled to the other side of the middle frame 200. For example, the second glass 120 may be coupled to the middle frame 200 on at least one of a side surface 123 and a lower surface 122. The second glass 120 and the middle frame 200 may be coupled by adhesion. The middle frame 200 may couple the first glass 110 and the second glass 120 to each other. **In** addition, the middle frame 200 may divide the first area 101 and the second area 102.

The outer frame 150 may cover a circumference of the glass assembly 100 so that the glass assembly 100 is fixed. The components of the glass assembly 100 including the first glass 110 and the second glass 120 may be coupled into one by the outer frame 150. The outer frame 150 may include a first frame 160 and a second frame 170. The first frame 160 may extend in a first direction. The first direction may be an X direction and/or a -X direction. The second frame 170 may extend in a second direction. The second direction may be a Y direction and/or a -Y direction. The first frame 160 and the second frame 170 may be coupled to each other. The first frame 160 and the second frame 170 coupled to each other may form the circumference of the glass assembly 100. For example, the first frame 160 may cover one side of the glass assembly 100, and the second frame 170 may cover the other side of the glass assembly 100. Also, when the first glass 110 and the second glass 120 are coupled, the first frame 160 may cover one side of the first glass 110 and one side of the second glass 120. For example, the first frame 160 may cover a left surface (a surface in the -X direction) and a right surface (a surface in the X direction) of the first glass 110 and the second glass 120. The second frame 170 may cover the other side of the first glass 110 or the second glass 120 when the first glass 110 and the second glass 120 are coupled. For example, the second frame 170 may cover a rear surface (a surface in the Y direction) of the first glass 110 and a front surface (a surface in the -Y direction) of the second glass 120.

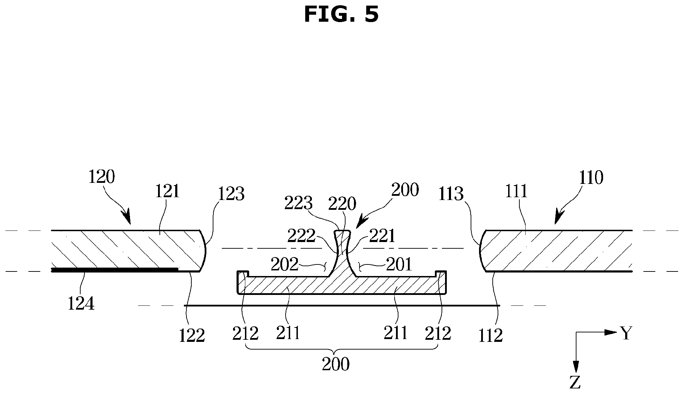

The glass assembly 100 may further include a bracket 180. The bracket 180 may be formed at an edge portion of the glass assembly 100. For example, the bracket 180 may be formed at edge portions of the first glass 110 and the second glass 120. The bracket 180 may be attached to the first glass 110 and the second glass 120 through heat-resistant silicone. A plurality of the brackets 180 may be provided. Some ones of the plurality of brackets 180 may be attached to the first glass 110 and the second glass 120 at both ends in the X direction in which the middle frame 200 extends. For example, at both ends in the X direction where only a column 220 (see FIG. 5 and the like) of the middle frame 200 is formed, the brackets 180 may be coupled to the first glass 110 and the second glass 120. The other ones of the plurality of brackets 180 may be attached to the first glass 110 or the second glass 120 of the glass assembly 100 in the Y direction.

The bracket 180 may be the first bracket 180. The first bracket 180 may be in contact with a second bracket 16 provided on the main body 10. The second bracket 16 may support the glass assembly 100 so that the glass assembly 100 is seated on the main body 10.

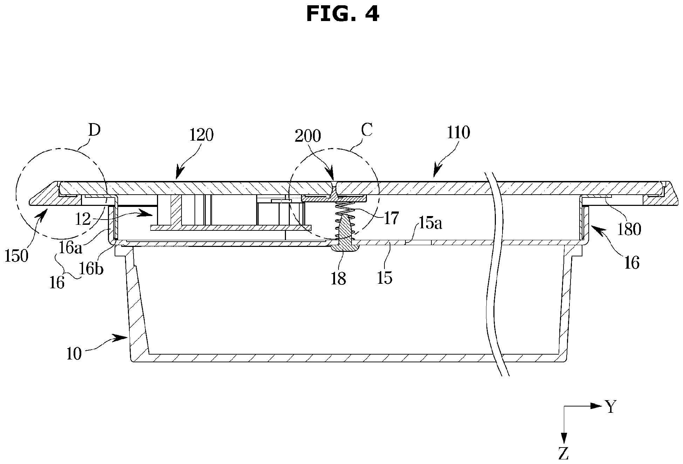

FIG. 4 is a cross-sectional view of the outer frame 150 and the plurality of glasses 110 and 120 in the cooking apparatus illustrated in FIG. 1. FIG. 4 is a cross-sectional view taken along line A-A' in the cooking apparatus illustrated in FIG. 1. In FIG. 4, some components of the cooking apparatus are omitted.

According to an embodiment of the present disclosure, the first glass 110 and the second glass 120 each may be coupled to the middle frame 200.

The cooking apparatus may further include the elastic member 17 and a fastener 18. The elastic member 17 may maintain the separation distance between the middle frame 200 and the coil mounting plate 15. The elastic member 17 may be disposed on the coil seating plate 15 by the fastener 18. The fastener 18 may penetrate the coil seating plate 15. The fastener 18 may be coupled to the coil seating plate 15.

The second bracket 16 may extend upwardly from an edge side of the coil seating plate 15. A ground portion 16b may be provided at the second bracket 16. For example, the ground portion 16b may be the ground tape 16b. The ground tape 16b may be provided on a bottom surface of a second bracket 16a provided on a front side. The ground portion 16b may ground the first bracket 180 and the second bracket 16. The ground portion 16b may ground the main body 10 and the glass assembly 100.

FIGS. 5 to 7 are cross-sectional views illustrating a process in which the plurality of glasses 110 and 120, and the middle frame 200 are coupled in the cooking apparatus illustrated in FIG. 2. FIGS. 5 to 7 are enlarged views of part C in FIG. 4.

Referring to FIGS. 5 to 7, according to an embodiment of the present disclosure, the first glass 110 may include an upper surface 111, the lower surface 112, and the side surface 113. The first glass 110 may be provided to have a first color. The first glass 110 may not transmit light.

The second glass 120 may include an upper surface 121, the lower surface 122, the side surface 123, and a painted surface 124. The second glass 120 may be provided to have a second color, and the painted surface 124 may exhibit the second color.

According to an embodiment of the present disclosure, the first color and the second color may be different. In other words, the color of the first glass 110 and the color of the second glass 120 may be provided differently. Through this, the cooking apparatus 1 of various designs may be implemented. However, the present disclosure is not limited thereto, and the first color and the second color may be the same. Accordingly, the first glass 110 and the second glass 120 may be provided with the same color while being divided by the middle frame 200.

The middle frame 200 may include a base 210 and the column 220.

The base 210 may be disposed below the first glass 110 and the second glass 120 to support the first glass 110 and the second glass 120. For example, the base 210 may support the lower surface 112 of the first glass 110 and the lower surface 122 of the second glass 120.

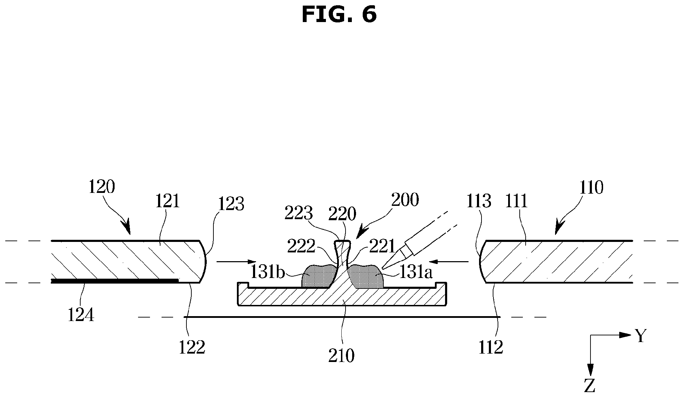

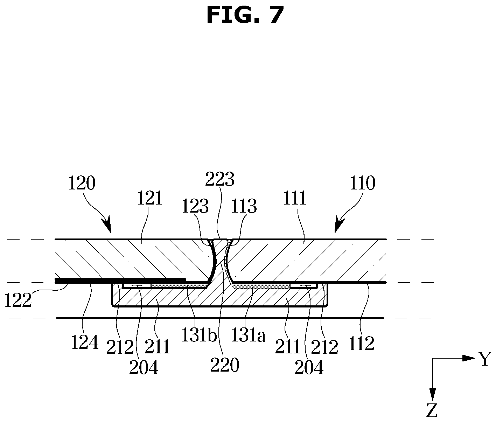

The base 210 may include a first portion 211 and a second portion 212. The first portion 211 may be spaced apart from the lower surface 112 of the first glass 110 and the lower surface 122 of the second glass 120 below the first glass 110 and the second glass 120. An adhesive member 131 may be disposed between the first portion 211 and the lower surface 112 of the first glass 110 and between the first portion 211 and the lower surface 122 of the second glass 120. The adhesive member 131 may adhere the middle frame 200 and the plurality of glasses 110 and 120 to each other. For example, the adhesive member 131 may allow the middle frame 200 and each of the plurality of glasses 110 and 120 to be coupled to each other. Through this, the first glass 110 and the second glass 120 may be coupled to each other. The second portion 212 may extend upwardly from one end of the first portion 211. The second portion 212 may support the lower surface 112 of the first glass 110 and/or the lower surface 122 of the second glass 120. As illustrated in FIGS. 6 and 7, when the adhesive member 131 is applied, the second portion 212 may cover an adhesive space 204 of the adhesive member 131 so that the adhesive member 131 does not deviate to the outside of the middle frame 200. The adhesive space 204 may be the first adhesive space 204. However, the formation position of the second portion 212 is not limited to the above example. The second portion 212 may also be formed in the middle of the first portion 211.

The column 220 may extend upwardly from the base 210. The column 220 may be disposed between the first glass 110 and the second glass 120 when the first glass 110 and the second glass 120 are respectively adhered to the middle frame 200. The column 220 may be formed to be recessed. For example, the column 220 may be curved to correspond to the side surfaces of the first glass 110 and the second glass 120. The column 220 may be formed to be curved while being recessed. Because the column 220 is formed to correspond to the side surfaces of the plurality of glasses 110 and 120, the first glass 110 and the second glass 120 may be brought as close as possible to each other. For example, the separation distance between the first glass 110 and the second glass 120 may be minimized. Because the separation distance between the first glass 110 and the second glass 120 is minimized, aesthetics may be improved. When the user looks at the glass assembly 100 from the top of the cooking apparatus, it may be seen that the separation distance between the first glass 110 and the second glass 120 is very small.

However, the column 220 may extend perpendicularly to the base 210 in a Z direction rather than being curved.

The column 220 may include a first curved surface 221, a second curved surface 222, and an upper surface 223. The first curved surface 221 may be a Y-direction surface of the column 220. The first curved surface 221 may be disposed adjacent to the side surface 113 of the first glass 110. The first curved surface 221 may be adhered to the side surface 113 of the first glass 110 by an adhesive member 131a. However, the present disclosure is not limited thereto, and the first curved surface 221 may be in contact with the side surface 113 of the first glass 110 without the adhesive member 131a. The second curved surface 222 may be a -Y-direction surface of the column 220. The second curved surface 222 may be disposed adjacent to the side surface 123 of the second glass 120. The second curved surface 222 may be adhered to the side surface 123 of the second glass 120 by an adhesive member 131b. However, the present disclosure is not limited thereto, and the second curved surface 222 may be in contact with the side surface 123 of the second glass 120 without the adhesive member 131b. A height of the upper surface 223 of the column 220 may be the same as heights of the upper surface 111 of the first glass 110 and the upper surface 121 of the second glass 120. For example, the upper surface 223 of the column 220 may be disposed on the same line in the Y direction as the upper surface 111 of the first glass 110 and the upper surface 121 of the second glass 120.

Referring to FIG. 5, the middle frame 200 may form coupling spaces 201 and 202. The coupling spaces 201 and 202 may be formed by the base 210 and the column 220. A plurality of the coupling spaces 201 and 202 may be provided. The first coupling space 201 may be a space in which the middle frame 200 and the first glass 110 are coupled and/or adhered. The second coupling space 202 may be a space in which the middle frame 200 and the second glass 120 are coupled and/or adhered. Referring to FIG. 7, the first coupling space 201 may be the first seating groove 201 in which the first glass 110 is seated. The second coupling space 202 may be the second seating groove 202 in which the second glass 120 is seated.

Referring to FIG. 6, the adhesive member 131 may be applied to each of the first seating groove 201 and the second seating groove 202. The adhesive member 131 may be provided to adhere the glass 100 and the middle frame 200. The adhesive member 131 may be applied in a liquid state to be solidified. For example, the adhesive member 131 may include silicon. The adhesive member 131 may be heat-resistant silicone. The adhesive member 131a applied to the first seating groove 201 may adhere the first glass 110 and the middle frame 200, and the adhesive member 131b applied to the second seating groove 202 may adhere the second glass 120 and the middle frame 200.

The first glass 110 may be seated in the first seating groove 201 to be coupled to the middle frame 200. The first glass 110 may be temporarily fixed by being seated in the first seating groove 201. The adhesive member 131a may be disposed between the first glass 110 and the middle frame 200 to adhere the first glass 110 and the middle frame 200. Specifically, when the first glass 110 is inserted into the first seating groove 201, the adhesive member 131a in a liquid state applied to the first seating groove 201 moves into a gap between the first seating groove 201 and the first glass 110 and then is solidified, so that the first glass 110 may be adhered to the first seating groove 201. At this time, the adhesive member 131a may be in contact with the side surface 113 and/or the lower surface 112 of the first glass 110.

The second glass 120 may be seated in the second seating groove 202 to be coupled to the middle frame 200. The second glass 120 may be temporarily fixed by being seated in the second seating groove 202. The adhesive member 131b may be disposed between the second glass 120 and the middle frame 200 to adhere the second glass 120 and the middle frame 200. Specifically, when the second glass 120 is inserted into the second seating groove 202, the adhesive member 131b in a liquid state applied to the second seating groove 202 moves into a gap between the second seating groove 202 and the second glass 120 and then is solidified, so that the second glass 120 may be adhered to the second seating groove 202. At this time, the adhesive member 131b may be in contact with the side surface 123 and/or the lower surface 122 of the second glass 120.

The glass assembly 100 may include the adhesive member 131. The adhesive member 131 may be the first adhesive member 131. The adhesive member 131 may adhere the first glass 110 and the middle frame 200, and may adhere the second glass 120 and the middle frame 200. The adhesive member 131a may be disposed between the lower surface 112 of the first glass 110 and the first portion 211 of the base 210. Also, the adhesive member 131b may be disposed between the lower surface 122 of the second glass 120 and the first portion 211 of the base 210. In addition, the adhesive member 131 may be disposed between the side surface 113 of the first glass 110 and the first curved surface 221 and between the side surface 123 of the second glass 120 and the second curved surface 222.

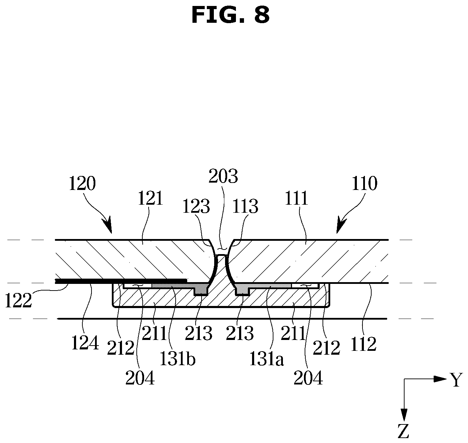

FIG. 8 is a cross-sectional view of a cooking apparatus according to another embodiment of the present disclosure.

Referring to FIG. 8, according to another embodiment of the present disclosure, an additional coupling space 203 may be formed above the column 220. The coupling space 203 provided above the column 220 may be the third coupling space 203. The height of the upper surface 223 of the column 220 may be provided to be lower than the heights of the upper surface 111 of the first glass 110 and the upper surface 121 of the second glass 120 in the Y direction.

According to another embodiment of the present disclosure, the middle frame 200 may further include a groove 213. The groove 213 may be recessed from an upper surface of the first portion 211. The groove 213 may be formed at a position adjacent to the column 220. When the first glass 110 and the second glass 120 are adhered to the middle frame 200 after the adhesive member 131 is applied, the groove 213 may allow the adhesive member 131 to be accommodated in the adhesive space 204 without deviating from the adhesive space 204. For example, the groove 213 may be the accommodating groove 213. The groove 213 may form a portion of the bonding space 204.

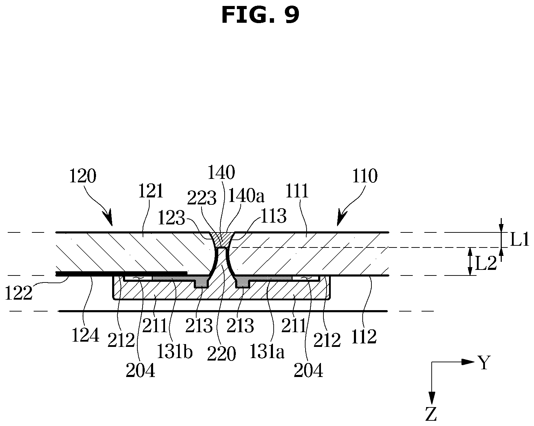

FIG. 9 is a cross-sectional view of a cooking apparatus according to another embodiment of the present disclosure.

Referring to FIG. 9, according to another embodiment of the present disclosure, the glass assembly 100 may further include a sealing member 140. The sealing member 140 may seal the third coupling space 203 in the embodiment illustrated in FIG. 8. The sealing member 140 may be disposed above the upper surface 223 of the column 220. Because the sealing member 140 seals the third coupling space 203 above the upper surface 223 of the column 220, dust, liquid and/or foreign substances may be not introduced into the coupling spaces 201, 202, and 203. Accordingly, the cooking apparatus may be kept clean and/or repaired. The sealing member 140 may include heat-resistant silicon. A height of the upper surface 140a of the sealing member 140 may be lower than or equal to heights of the upper surface 111 of the first glass 110 and the upper surface 121 of the second glass 120 in the Z direction. Accordingly, the sealing member 140 may not protrude further upward than the upper surface 111 of the first glass 110 and the upper surface 121 of the second glass 120, and aesthetics may be improved.

For example, a length L2 of the column 220 in the Z direction and a length L1 of the sealing member 140 in the Z direction may be 2:1. The thickness L2 of the column 220 in the Z direction and the thickness L1 of the sealing member 140 in the Z direction may be 2:1. A length of the plurality of glasses 110 and 120 in the Z direction and the length of the sealing member 140 in the Z direction may be 3:1.

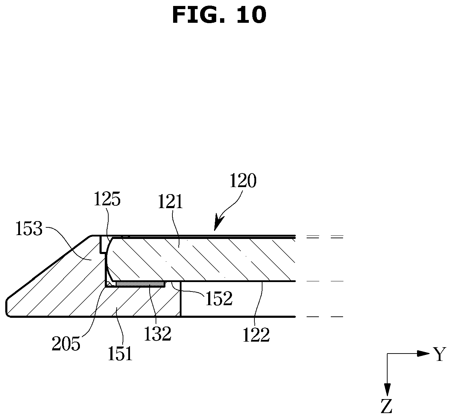

FIG. 10 is a cross-sectional view of the cooking apparatus according to an embodiment of the present disclosure. FIG. 10 is an enlarged view of part D in FIG. 4.

Referring to FIG. 10, according to an embodiment of the present disclosure, the outer frame 150 may include a first portion 151, a second portion 152, and a third portion 153. The first portion 151 may be spaced apart from the lower surface 112 of the first glass 110 and/or the lower surface 122 of the second glass 120 to accommodate an adhesive member 132. The second portion 152 may support the lower surface 112 of the first glass 110 and/or the lower surface 122 of the second glass 120. The second portion 152 may protrude upward from one end of the first portion 151. However, the position of the second part 152 is not limited to the above example. The second portion 152 may prevent the adhesive member 132 from deviating an adhesive space 205. The third portion 153 may extend upward from the other end of the first portion 151. The third portion 153 may cover circumferences of the first glass 110 and the second glass 120. Because the third portion covers the circumference of the glass assembly 100, the plurality of glasses 110 and 120 and the middle frame 200 may be protected from an external environment of the cooking apparatus.

The glass assembly 100 may further include the adhesive member 132. The adhesive member 132 may be the second adhesive member 132. The adhesive member 132 may adhere the first glass 110 and/or the second glass 120 to the outer frame 150. The adhesive member 132 may be disposed between the lower surface 112 of the first glass 110 and/or the lower surface 122 of the second glass 120 and the first portion 151. The second portion 152 may prevent the adhesive member 132 from deviating the adhesive space 205. The adhesive space 205 may be formed between the lower surface 112 of the first glass 110 and/or the lower surface 122 of the second glass 120 and the first portion 151. The adhesive space 205 may be the second adhesive space 205.

An edge surface 125 of the second glass 120 may be in contact with the outer frame 150. Although not illustrated in FIG. 10, an edge surface of the first glass 110 may also be in contact with the outer frame 150.

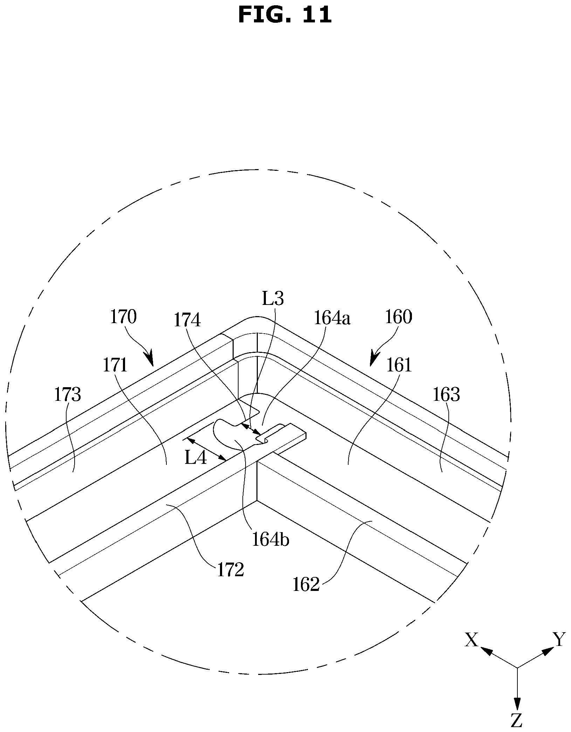

FIG. 11 is an enlarged perspective view of the outer frame 150 in the cooking apparatus illustrated in FIG. 3. FIG. 11 is an enlarged perspective view of part B illustrated in FIG. 3.

Referring to FIG. 11, according to an embodiment of the present disclosure, the outer frame 150 may include the first frame 160 and the second frame 170. The first frame 160 may extend in the first direction. The second frame 170 may extend in the second direction. The first frame 160 and the second frame 170 may be coupled to each other. The coupled first and second frames 160 and 170 may form the circumference of the glass assembly 100.

The first frame 160 may include a first portion 161, a second portion 162, and a third portion 163, respectively, and the second frame 170 may also include a first portion 171, a second portion 172, and a third portion 173.

The first frame 160 may further include a coupling protrusion 164. The coupling protrusion 164 may protrude toward the second direction from one end of the first frame 160 in the first direction. For example, the coupling protrusion 164 may protrude toward the -Y direction from one end of the first frame 160 in the X direction. The coupling protrusion 164 may include a neck 164a and a head 164b. The neck 164a may extend in the second direction. The head 164b may be formed at one end of the neck 164a in the second direction. The head 164b may be formed at one end of the neck 164a and the other end of the neck may be connected to one end of the first frame 160. A length L4 of the head 164b in the first direction may be longer than a length L3 of the neck 164a in the first direction. A cross-sectional area of the head 164b may be larger than a cross-sectional area of the neck 164a so that the coupling between the first frame 160 and the second frame 170 is not separated. The coupling protrusion 164 may be formed on the first portion 161 of the first frame 16.

The second frame 170 may include a coupling groove 174 provided in a shape corresponding to the coupling protrusion 164. The coupling groove 174 may be recessed from one end of the second frame 170 in the second direction. The coupling groove 174 may be formed on the first portion 171 of the second frame 170.

The coupling protrusion 164 and the coupling groove 174 may increase a coupling area of the first frame 160 and the second frame 170, and through this, the first frame 160 and the second frame 170 may be stably coupled.

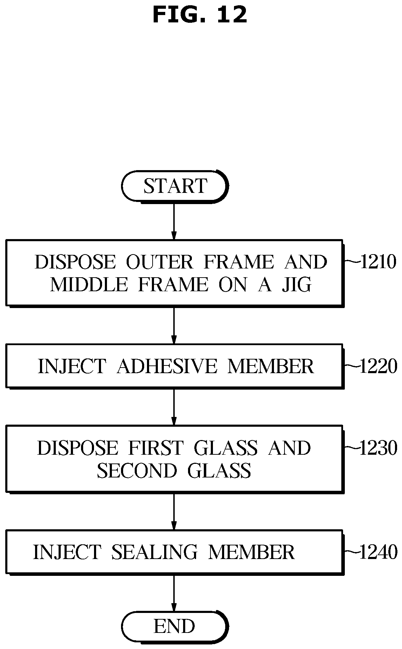

FIG. 12 is a flowchart illustrating a manufacturing method of the cooking apparatus according to an embodiment of the present disclosure.

Referring to FIG. 12, a manufacturing method of the cooking apparatus according to an embodiment of the present disclosure may include disposing the outer frame 150 and the middle frame 200 on a jig (1210), injecting the adhesive members 131 and 132 into the adhesive spaces 204 and 205 of the outer frame 150 and the coupling spaces 201 and 202 and/or the adhesive spaces 204 and 205 of the middle frame 200 (1220), disposing the first glass 110 and the second glass 120 in the coupling spaces 201 and 202 and/or the adhesive spaces 204 and 205, respectively (1230), and injecting the sealing member 140 into the third coupling space 203 (1240). The manufacturing method of the cooking apparatus may further include removing the sealing member 140 protruding upward. By removing the protruding sealing member 140, flatness of the upper surface of the glass assembly 100 may be maintained, and a decrease in usability and aesthetics due to the protruding shape may be prevented when a user moves the cooking container 2 or washes the glass assembly.

The foregoing has illustrated and described specific embodiments. However, it should be understood by those of skilled in the art that the disclosure is not limited to the above-described embodiments, and various changes and modifications may be made without departing from the technical idea of the disclosure described in the following claims.

## Claims

1. A cooking apparatus (1) comprising:
a main body (10) provided to accommodate an induction heating coil; and
a glass assembly (100) provided above the main body to allow a cooking container (2) to be placed thereon,
wherein the glass assembly comprises:
a first glass (110) forming a first area (101) on which the cooking container is to be placed;
a second glass (120) forming a second area (102) separated from the first area; and
a coupling member (200) coupled to each of the first glass and the second glass, the coupling member comprising a base (210) disposed below the first glass and the second glass to support the first glass and the second glass; **characterized in that** the coupling member comprises a column (220) extending upward from the base and be curved to correspond to a side surface (113) of the first glass and a side surface (123) of the second glass.

2. The cooking apparatus according to claim 1, wherein
the glass assembly further comprises an adhesive member (131) provided to couple the first glass (110) and the second glass (120) to the coupling member, (200) and
the base (210 comprises a first portion (211) spaced apart from a lower surface (112) of the first glass and spaced apart a lower surface (124) of the second glass to accommodate the adhesive member;
and a second portion (212) protruding upward from one end of the first portion to support the first glass and the second glass.

3. The cooking apparatus according to claim 2, wherein
the coupling member (200) further comprises a groove (201) depressed downward from an upper surface of the first portion (211) to accommodate the adhesive member (131) and formed adjacent to the column (220).

4. The cooking apparatus according to claim 3, wherein
an upper surface (223) of the column is formed to be lower than an upper surface (111) of the first glass (110) and lower than an upper surface (121) of the second glass (120), and
the glass assembly (100) further comprises a sealing member (140) provided above the upper surface (223) of the column to seal a coupling space (203) between the first glass and the second glass and the coupling member.

5. The cooking apparatus according to claim 4, wherein
a height of an upper surface (140a) of the sealing member (140) is provided to be lower than or equal to a height of the upper surface (111) of the first glass and a height of the upper surface (121) of the second glass.

6. The cooking apparatus according to claim 4, wherein
a ratio of a thickness of the first glass and the second glass to a thickness of the sealing member is 3:1.

7. The cooking apparatus according to claim 1, wherein
the first glass (110) and the second glass (120) are formed of different materials, and
the glass assembly further comprises an outer frame (150) provided to cover circumferences of the first glass and the second glass to fix the first glass and the second glass.

8. The cooking apparatus according to claim 7, wherein
the glass assembly further comprises an adhesive member (132) disposed between the first glass and the second glass and the outer frame, and
the outer frame comprises:
a first portion (151) spaced apart from a lower surface of the first glass or spaced apart a lower surface of the second glass to accommodate the adhesive member;
a second portion (152) protruding upward from one end of the first portion to support the first glass or the second glass; and
a third portion (153) protruding upward from another end of the first portion to cover a circumference of the glass assembly.

9. The cooking apparatus according to claim 7, wherein
the outer frame comprises a first frame (160) extending in a first direction to cover one side of the glass assembly; and a second frame (170) coupled to the first frame and extending in a second direction perpendicular to the first direction to cover another side of the glass assembly,
the first frame comprises a coupling protrusion (164) protruding from one end thereof along the first direction to be coupled to the second frame, and
the second frame comprises a coupling groove (174) recessed from one end thereof along the second direction to accommodate the coupling protrusion.

10. The cooking apparatus according to claim 9, wherein
the coupling protrusion (164) comprises:
a neck (164a) extending in the second direction; and
a head (164b) provided at one end of the neck along the second direction and having a length longer along the first direction than a length of the neck along the first direction.

11. The cooking apparatus according to claim 1, wherein
the glass assembly further comprises a bracket (180) provided on edge portions of the first glass (110) and the second glass (120) to be coupled to the main body.

12. The cooking apparatus according to claim 11, further comprising
a circuit board (12) provided below the second glass (120) in the main body to receive an input from the second glass,
wherein an input part (102b) electrically connected to the circuit board is provided in the second area to control a current flowing through the induction heating coil.

13. The cooking apparatus according to claim 12, wherein the bracket (180) is a first bracket, and
the main body further comprises: a second bracket (16) in contact with the first bracket to support the first glass and the second glass; and a ground portion (16b) provided on the first bracket.

14. The cooking apparatus according to claim 1, further comprising
an outer frame (150) provided to cover circumferences of the first glass and the second glass to fix the first glass and the second glass.

15. The cooking apparatus according to claim 14, wherein
the outer frame (150) comprises a first frame (160) extending in a first direction to cover one sides of the first glass and the second glass; and a second frame (170) coupled to the first frame and extending in a second direction perpendicular to the first direction to cover the other side of the first glass or the second glass,
the first frame (160) comprises a coupling protrusion (164) protruding from one end thereof along the first direction to be coupled to the second frame, and
the second frame (170) comprises a coupling groove (174) recessed from one end hereof along the second direction to accommodate the coupling protrusion (164).

## Patentansprüche

1. Kochvorrichtung (1), umfassend:
einen Hauptkörper (10), der dazu bereitgestellt ist, eine Induktionsheizspule aufzunehmen; und
eine Glasanordnung (100), die oberhalb des Hauptkörpers bereitgestellt ist, damit ein Kochbehälter (2) darauf platziert werden kann,
wobei die Glasanordnung Folgendes umfasst:
ein erstes Glas (110), das einen ersten Bereich (101) bildet, auf dem der Kochbehälter zu platzieren ist;
ein zweites Glas (120), das einen zweiten Bereich (102) bildet, der von dem ersten Bereich getrennt ist; und
ein Kopplungselement (200), das an jedes des ersten Glases und des zweiten Glases gekoppelt ist,
wobei das Kopplungselement eine Basis (210), die unterhalb des ersten Glases und des zweiten Glases angeordnet ist, zum Tragen des ersten Glases und des zweiten Glases umfasst; **dadurch gekennzeichnet, dass** das Kopplungselement eine Säule (220) umfasst, die sich von der Basis nach oben erstreckt und entsprechend einer Seitenfläche (113) des ersten Glases und einer Seitenfläche (123) des zweiten Glases gekrümmt ist.

2. Kochvorrichtung nach Anspruch 1, wobei
die Glasanordnung ferner ein Klebeelement (131) umfasst, das dazu bereitgestellt ist, das erste Glas (110) und das zweite Glas (120) an das Kopplungselement (200) zu koppeln, und die Basis (210) einen ersten Abschnitt (211) umfasst, der von einer unteren Fläche (112) des ersten Glases beabstandet ist und von einer unteren Fläche (124) des zweiten Glases beabstandet ist, um das Klebeelement aufzunehmen;
und ein zweiter Abschnitt (212) von einem Ende des ersten Abschnitts nach oben vorsteht, um das erste Glas und das zweite Glas zu tragen.

3. Kochvorrichtung nach Anspruch 2, wobei
das Kopplungselement (200) ferner eine Nut (201) umfasst, die von einer oberen Fläche des ersten Abschnitts (211) nach unten niedergedrückt ist, um das Klebeelement (131) aufzunehmen, und an die Säule (220) angrenzend ausgebildet ist.

4. Kochvorrichtung nach Anspruch 3, wobei
eine obere Fläche (223) der Säule so ausgebildet ist, dass sie niedriger als eine obere Fläche (111) des ersten Glases (110) und niedriger als eine obere Fläche (121) des zweiten Glases (120) ist, und
die Glasanordnung (100) ferner ein Dichtungselement (140) umfasst, das oberhalb der oberen Fläche (223) der Säule dazu bereitgestellt ist, einen Kopplungsraum (203) zwischen dem ersten Glas und dem zweiten Glas und dem Kopplungselement abzudichten.

5. Kochvorrichtung nach Anspruch 4, wobei
eine Höhe einer oberen Fläche (140a) des Dichtungselements (140) so bereitgestellt ist, dass sie niedriger als oder gleich einer Höhe der oberen Fläche (111) des ersten Glases und einer Höhe der oberen Fläche (121) des zweiten Glases ist.

6. Kochvorrichtung nach Anspruch 4, wobei
ein Verhältnis einer Dicke des ersten Glases und des zweiten Glases zu einer Dicke des Dichtungselements 3:1 beträgt.

7. Kochvorrichtung nach Anspruch 1, wobei
das erste Glas (110) und das zweite Glas (120) aus verschiedenen Materialien gebildet sind, und
die Glasanordnung ferner einen Außenrahmen (150) umfasst, der dazu bereitgestellt ist, Umfänge des ersten Glases und des zweiten Glases abzudecken, um das erste Glas und das zweite Glas zu fixieren.

8. Kochvorrichtung nach Anspruch 7, wobei
die Glasanordnung ferner ein Klebeelement (132) umfasst, das zwischen dem ersten Glas und dem zweiten Glas und dem Außenrahmen angeordnet ist, und der Außenrahmen Folgendes umfasst:
einen ersten Abschnitt (151), der von einer unteren Fläche des ersten Glases beabstandet ist oder von einer unteren Fläche des zweiten Glases beabstandet ist, um das Klebeelement aufzunehmen;
einen zweiten Abschnitt (152), der von einem Ende des ersten Abschnitts nach oben vorsteht, um das erste Glas oder das zweite Glas zu tragen; und
einen dritten Abschnitt (153), der von einem anderen Ende des ersten Abschnitts nach oben vorsteht, um einen Umfang der Glasanordnung abzudecken.

9. Kochvorrichtung nach Anspruch 7, wobei
der Außenrahmen einen ersten Rahmen (160) umfasst, der sich in einer ersten Richtung erstreckt, um eine Seite der Glasanordnung abzudecken; und einen zweiten Rahmen (170), der an den ersten Rahmen gekoppelt ist und sich in einer zweiten Richtung senkrecht zu der ersten Richtung erstreckt, um eine andere Seite der Glasanordnung abzudecken,
der erste Rahmen einen Kopplungsvorsprung (164) umfasst, der von einem Ende davon entlang der ersten Richtung vorsteht, der an den zweiten Rahmen zu koppeln ist, und
der zweite Rahmen eine Kopplungsnut (174) umfasst, die von einem Ende davon entlang der zweiten Richtung vertieft ist, um den Kopplungsvorsprung aufzunehmen.

10. Kochvorrichtung nach Anspruch 9, wobei
der Kopplungsvorsprung (164) Folgendes umfasst:
einen Hals (164a), der sich in der zweiten Richtung erstreckt; und
einen Kopf (164b), der an einem Ende des Halses entlang der zweiten Richtung bereitgestellt ist und eine Länge aufweist, die entlang der ersten Richtung länger ist als eine Länge des Halses entlang der ersten Richtung.

11. Kochvorrichtung nach Anspruch 1, wobei
die Glasanordnung ferner eine Halterung (180) umfasst, die an Randabschnitten des ersten Glases (110) und des zweiten Glases (120) dazu bereitgestellt ist, an den Hauptkörper gekoppelt zu sein.

12. Kochvorrichtung nach Anspruch 11, ferner umfassend
eine Leiterplatte (12), die unterhalb des zweiten Glases (120) in dem Hauptkörper dazu bereitgestellt ist, einen Eingang von dem zweiten Glas zu empfangen,
wobei ein Eingangsteil (102b), der elektrisch mit der Leiterplatte verbunden ist, in dem zweiten Bereich dazu bereitgestellt ist, einen durch die Induktionsheizspule fließenden Strom zu steuern.

13. Kochvorrichtung nach Anspruch 12, wobei die Halterung (180) eine erste Halterung ist und der Hauptkörper ferner Folgendes umfasst: eine zweite Halterung (16), die in Kontakt mit der ersten Halterung ist, um das erste Glas und das zweite Glas zu tragen; und einen Erdungsabschnitt (16b), der auf der ersten Halterung bereitgestellt ist.

14. Kochvorrichtung nach Anspruch 1, ferner umfassend
einen Außenrahmen (150), der dazu bereitgestellt ist, Umfänge des ersten Glases und des zweiten Glases abzudecken, um das erste Glas und das zweite Glas zu fixieren.

15. Kochvorrichtung nach Anspruch 14, wobei
der Außenrahmen (150) einen ersten Rahmen (160) umfasst, der sich in einer ersten Richtung erstreckt, um eine Seite des ersten Glases und des zweiten Glases abzudecken; und einen zweiten Rahmen (170), der an den ersten Rahmen gekoppelt ist und sich in einer zweiten Richtung senkrecht zu der ersten Richtung erstreckt, um die andere Seite des ersten Glases oder des zweiten Glases abzudecken,
der erste Rahmen (160) einen Kopplungsvorsprung (164) umfasst, der von einem Ende davon entlang der ersten Richtung vorsteht, der an den zweiten Rahmen zu koppeln ist, und
der zweite Rahmen (170) eine Kopplungsnut (174) umfasst, die von einem Ende hiervon entlang der zweiten Richtung vertieft ist, um den Kopplungsvorsprung (164) aufzunehmen.

## Revendications

1. Appareil de cuisson (1) comprenant :
un corps principal (10) prévu pour recevoir une bobine de chauffage par induction ; et
un ensemble en verre (100) prévu au-dessus du corps principal pour permettre de placer un récipient de cuisson (2) sur celui-ci,
dans lequel l'ensemble en verre comprend :
un premier verre (110) formant une première zone (101) sur laquelle le récipient de cuisson doit être placé ;
un second verre (120) formant une seconde zone (102) séparée de la première zone ; et
un élément d'accouplement (200) couplé à chacun du premier verre et du second verre,
l'élément d'accouplement comprenant une base (210) disposée sous le premier verre et le second verre pour supporter le premier verre et le second verre ; **caractérisé en ce que** l'élément d'accouplement comprend une colonne (220) s'étendant vers le haut à partir de la base et étant incurvée pour correspondre à une surface latérale (113) du premier verre et à une surface latérale (123) du second verre.

2. Appareil de cuisson selon la revendication 1, dans lequel
l'ensemble en verre comprend en outre un élément adhésif (131) prévu pour coupler le premier verre (110) et le second verre (120) à l'élément d'accouplement (200) et
la base (210) comprend une première partie (211) espacée d'une surface inférieure (112) du premier verre et espacée d'une surface inférieure (124) du second verre pour recevoir l'élément adhésif ;
et une seconde partie (212) faisant saillie vers le haut à partir d'une extrémité de la première partie pour supporter le premier verre et le second verre.

3. Appareil de cuisson selon la revendication 2, dans lequel
l'élément d'accouplement (200) comprend en outre une rainure (201) enfoncée vers le bas depuis une surface supérieure de la première partie (211) pour recevoir l'élément adhésif (131) et formée adjacente à la colonne (220).

4. Appareil de cuisson selon la revendication 3, dans lequel
une surface supérieure (223) de la colonne est formée pour être inférieure à une surface supérieure (111) du premier verre (110) et inférieure à une surface supérieure (121) du second verre (120), et
l'ensemble en verre (100) comprend en outre un élément d'étanchéité (140) prévu au-dessus de la surface supérieure (223) de la colonne pour assurer l'étanchéité d'un espace d'accouplement (203) entre le premier verre et le second verre et l'élément d'accouplement.

5. Appareil de cuisson selon la revendication 4, dans lequel
une hauteur d'une surface supérieure (140a) de l'élément d'étanchéité (140) est prévue pour être inférieure ou égale à une hauteur de la surface supérieure (111) du premier verre et à une hauteur de la surface supérieure (121) du second verre.

6. Appareil de cuisson selon la revendication 4, dans lequel
un rapport d'une épaisseur du premier verre et du second verre à une épaisseur de l'élément d'étanchéité est de 3:1.

7. Appareil de cuisson selon la revendication 1, dans lequel
le premier verre (110) et le second verre (120) sont formés de matériaux différents, et
l'ensemble en verre comprend en outre un cadre extérieur (150) prévu pour couvrir les circonférences du premier verre et du second verre pour fixer le premier verre et le second verre.

8. Appareil de cuisson selon la revendication 7, dans lequel
l'ensemble en verre comprend en outre un élément adhésif (132) disposé entre le premier verre et le second verre et le cadre extérieur, et
le cadre extérieur comprend :
une première partie (151) espacée d'une surface inférieure du premier verre ou espacée d'une surface inférieure du second verre pour recevoir l'élément adhésif ;
une deuxième partie (152) faisant saillie vers le haut à partir d'une extrémité de la première partie pour supporter le premier verre et le second verre ; et
une troisième partie (153) faisant saillie vers le haut à partir d'une autre extrémité de la première partie pour couvrir une circonférence de l'ensemble en verre.

9. Appareil de cuisson selon la revendication 7, dans lequel
le cadre extérieur comprend un premier cadre (160) s'étendant dans une première direction pour couvrir un côté de l'ensemble en verre ; et un second cadre (170) couplé au premier cadre et s'étendant dans une seconde direction perpendiculaire à la première direction pour couvrir un autre côté de l'ensemble en verre,
le premier cadre comprend une saillie d'accouplement (164) faisant saillie à partir d'une extrémité de celui-ci le long de la première direction pour être couplé au second cadre, et
le second cadre comprend une rainure d'accouplement (174) en retrait à partir d'une extrémité de celui-ci le long de la seconde direction pour recevoir la saillie d'accouplement.

10. Appareil de cuisson selon la revendication 9, dans lequel
la saillie d'accouplement (164) comprend :
un col (164a) s'étendant dans la deuxième direction ; et
une tête (164b) prévue à une extrémité du col le long de la seconde direction et comportant une longueur plus longue le long de la première direction qu'une longueur du col le long de la première direction.

11. Appareil de cuisson selon la revendication 1, dans lequel
l'ensemble en verre comprend en outre un support (180) prévu sur les parties de bord du premier verre (110) et du second verre (120) pour être couplé au corps principal.

12. Appareil de cuisson selon la revendication 11, comprenant en outre
une carte de circuit (12) prévue en dessous du second verre (120) dans le corps principal pour recevoir une entrée en provenance du second verre,
dans lequel une pièce d'entrée (102b) connectée électriquement à la carte de circuit est prévue dans la seconde zone pour commander un courant circulant à travers la bobine de chauffage par induction.

13. Appareil de cuisson selon la revendication 12, dans lequel le support (180) est un premier support, et
le corps principal comprend en outre : un second support (16) en contact avec le premier support pour supporter le premier verre et le second verre ; et une partie de masse (16b) prévue sur le premier support.

14. Appareil de cuisson selon la revendication 1, comprenant en outre
un cadre extérieur (150) prévu pour couvrir les circonférences du premier verre et du second verre pour fixer le premier verre et le second verre.

15. Appareil de cuisson selon la revendication 14, dans lequel
le cadre extérieur (150) comprend un premier cadre (160) s'étendant dans une première direction pour couvrir des premiers côtés du premier verre et du second verre ; et un second cadre (170) couplé au premier cadre et s'étendant dans une seconde direction perpendiculaire à la première direction pour couvrir l'autre côté du premier verre ou du second verre,
le premier cadre (160)comprend une saillie d'accouplement (164) faisant saillie à partir d'une première extrémité de celle-ci le long de la première direction pour être couplé au second cadre, et
le second cadre (170) comprend une rainure d'accouplement (174) en retrait à partir d'une extrémité de celui-ci le long de la seconde direction pour recevoir la saillie d'accouplement (164).
